# EUROPEAN PATENT SPECIFICATION

(11) **EP 4 509 192 B1**
(45) Date of publication and mention of the grant of the patent: **13.05.2026**
(21) Application number: 25150078.1
(22) Date of filing: 17.01.2023
(51) Int. Cl.: A63F 13/21, A63F 13/355, A63F 13/428, A63F 13/5255

(54) **ULTRA-WIDEBAND RADAR DEVICES FOR CLOUD-BASED GAMING CONTROL**
ULTRABREITBANDRADARVORRICHTUNGEN ZUR CLOUD-BASIERTEN SPIELSTEUERUNG
DISPOSITIFS RADAR À BANDE ULTRA-LARGE POUR COMMANDE DE JEU EN NUAGE

(43) Date of publication of application: 19.02.2025
(62) Divisional of application: 23705752.6
(73) Proprietor: Google LLC, Mountain View, CA 94043 (US)
(72) Inventor: SCHARFENBERG, Scott D., Mountain View, 94043 (US)
(74) Representative: Maikowski & Ninnemann Patentanwälte Partnerschaft mbB

(56) References cited:
- CN-A- 113 918 004
- US-A1- 2019 077 007
- US-A1- 2020 271 450
- US-A1- 2020 289 922
- US-A1- 2021 064 145
- US-A1- 2021 374 782

## Description

### BACKGROUND

Conventionally, virtual reality video gaming applications run on local hardware to produce virtual environments that are provided to a virtual reality headset worn by the user. To help ensure that the virtual environment of the virtual reality gaming application moves as a user moves, many virtual reality systems include one or more virtual reality base stations that must be placed around the user. These virtual reality base stations use laser-based optical sensors to determine the position and movement of the virtual reality headset and user. The reality video gaming application then changes the virtual environment based on the positions and movement so that the virtual environment changes as the user and virtual reality headset move. However, placing these virtual reality base stations around the user reduces the area in which the user can move, negatively impacting user experience. Further, using dedicated virtual reality base stations increases the number of elements required for a virtual reality system, causing the set-up of the virtual reality system to be more cumbersome. Additionally, to help ensure that the virtual environment of the virtual reality gaming application moves as a user moves, some virtual reality systems include one or more cameras integrated into the virtual reality headset that are used to determine the position and movement of the virtual reality headset and user. However, such cameras require high power to function, increasing the power consumption of the system. US 2020/289922 A1 and US 2020/271450 A1 disclose radar-based motion tracking of a wearable display.

### SUMMARY

The proposed solution relates to a computer-implemented method for cloud-based gaming as stated in claim 1 and a cloud-based gaming system as stated in claim 11.

### BRIEF DESCRIPTION OF THE DRAWINGS

The present disclosure may be better understood, and its numerous features and advantages are made apparent to those skilled in the art by referencing the accompanying drawings. The use of the same reference symbols in different drawings indicates similar or identical items.
FIG. 1 is a block diagram of a cloud-based gaming system for single-player or multiplayer (including massively multiplayer) gaming, in accordance with some embodiments.
FIG. 2 is a block diagram of a client system configured for implementing radar for cloud-based gaming inputs, in accordance with some embodiments.
FIG. 3 is a signal flow diagram for an example process for implementing radar for cloud-based gaming, in accordance with some embodiments.
FIG. 4 is a block diagram of an example processing device 400 for implementing radar for cloud-based gaming inputs is presented, in accordance with some embodiments.
FIG. 5 is a flow diagram of an example method for implementing radar for cloud-based gaming inputs, in accordance with some embodiments.

### SUMMARY OF EMBODIMENTS

According to an example embodiment, a method for cloud-based gaming can include, in response to a wearable display receiving a game stream, transmitting a radar signal. Further, the method can include determining, from an echo of the radar signal, motion data of a user of the wearable display and generating one or more game inputs based on the motion data of the user of the wearable display.

The example method can further include modifying the game stream based on the one or more game inputs and sending the modified game stream to the wearable display. Additionally, the method can include generating, at the wearable display sensor data associated with the user, wherein the one or more game inputs are further determined based on the sensor data associated with the user. Further, the method may include receiving, at an input device, one or more interactions, wherein the one or more game inputs are further determined based on input data representing the one or more interactions. The method can also include sending the one or more game inputs to a cloud-based server associated with the game stream. The motion data can indicate a position of the user, a position of the wearable display, or both. Further, the wearable display may be connected to a smart ecosystem including an ecosystem device configured to transmit the radar signal. Also, the ecosystem device can include at least one of a smart hub, display, or sensor. Additionally, the radar signal may include an ultra-wideband radar signal.

In another example embodiment, a method for cloud-based gaming may include, in response to initiating a client gaming session, receiving, from a wearable display, sensor data associated with a user of the wearable display, and, from an ecosystem device, radar data associated with the user of the wearable display. Additionally, the method can include determining one or more game inputs based on the sensor data and radar data associated with the user of the wearable display. The method can also include, in response to sending the one or more game inputs to a cloud-based server associated with the client gaming session, receiving a modified game stream based on the one or more game inputs.

The method can further include generating, at the cloud-based server associated with the client gaming session, a game stream and modifying the game stream based on the one or more game inputs. Also, the wearable display and ecosystem device can be within a smart ecosystem. The ecosystem device may include radar circuitry configured to transmit an ultra-wideband radar signal.

The method may additionally include receiving, from an input device, input data representing one or more interactions with the input device, wherein the one or more game inputs are determined further based on the input data. Further, the method can include transmitting a radar signal and, in response to receiving an echo of the radar signal, determining the radar data associated with the user of the wearable display based on the echo of the radar signal. Within the method, the ecosystem devices can include at least one of a smart hub, display, or sensor. The method can further include determining motion data associated with the user of the wearable display based on the radar data, wherein the one or more game inputs are determined further based on the motion data. In the method, the motion data may indicate a position of the user of the wearable display, a position of the wearable display, or both.

In example embodiments, a cloud-based gaming system includes one or more cloud-based gaming servers communicatively coupled to one or more client systems. The client systems may each include a wearable display including one or more processors and one or more ecosystem devices. At least one ecosystem device can include one or more processors and a memory coupled to the one or more processors and storing executable instructions configured to manipulate the one or more processors to perform any method disclosed herein.

In another example embodiment, a cloud-based gaming system includes one or more cloud-based gaming servers communicatively coupled to one or more smart ecosystems. The smart ecosystems may each include a wearable display including one or more processors and one or more ecosystem devices. At least one ecosystem device can include one or more processors and a memory coupled to the one or more processors and storing executable instructions configured to manipulate the one or more processors to perform any method disclosed herein.

### DETAILED DESCRIPTION

Within cloud-based gaming systems, client systems are configured to receive a stream of video game frames representing the visual content of a video game instance being executed at that server or a related server and display the stream of video frames on one or more devices. For example, some client systems include a virtual reality headset (e.g., wearable display) configured to display the stream of video game frames. To control the game represented by the stream of video game frames displayed by such a virtual reality headset, the client system further includes input devices configured to receive interactions from a user, for example, gamepads, joysticks, buttons, keyboards, computer mice, touchscreens, or any combination thereof. In response to receiving interactions at the input devices, the client system is configured to send data representing the interactions to the server executing the video game instance associated with the stream of video game frames displayed by the virtual reality headset. As an example, the client system determines a game input (e.g., a signal interpretable as one or more commands by the video game instance) based on the interactions at the input devices and sends the game input to the associated server. After receiving the data representing the inputs (e.g., game inputs), the server provides such data to the video game instance as an input, modifying the video game instance and the stream of video game frames provided to the virtual reality headset. In this way, the client system controls the game represented by the stream of video game frames displayed by the virtual reality headset.

Additionally, to help control the game represented by the stream of video game frames displayed by the virtual reality headset (e.g., wearable display), the virtual reality headset includes one or more sensors configured to generate data indicating one or more movements of the user. For example, the virtual reality headset includes sensors configured to track the movement of a user's head, the movement of the virtual reality, or both. After such data is generated, the client system determines game inputs based on the indicated movements of the user and sends the game inputs to the associated server (e.g., the server running the video game instance). In some embodiments, client systems further include virtual reality base stations to help determine the movements of a user (e.g., the movement of a user's head, the movement of user's body, the movement of the virtual reality headset, the movement of input devices). Such virtual reality base stations, for example, include one or more laser-based tracking systems and are configured to be positioned proximately to a user such that the movements of the user are able to be determined. However, positioning such virtual reality base stations proximate to the user limits the area in which the user can move, negatively impacting user experience. Additionally, using dedicated virtual reality base stations increases the number of elements required for a virtual reality system, causing the set-up of the virtual reality system to be more cumbersome, negatively impacting user experience, and increasing cost. Further, in some embodiments, a virtual reality headset includes one or more cameras implemented within the virtual reality headset that track the movement of a user's head, the movement of the virtual reality, or both. However, such cameras implemented in the virtual reality headset increase the power consumption of the virtual reality headset, increasing the cost of operating the virtual reality headset.

To this end, techniques and system described herein are directed towards implementing ultra-wideband (UWB) radar for cloud-based gaming inputs. For example, to help determine the movements of a user in a client system including a virtual reality headset (e.g., wearable display), the client system includes ecosystem devices each implementing radar circuitry (e.g., UWB radar circuitry) configured to transmit one or more radar signals (e.g., UWB radar signals) and receive one or more echoes of the transmitted radar signal. These ecosystem devices include, for example, smart hubs, virtual assistant devices, compute-enabled televisions (i.e., smart TVs), sensors (e.g., smoke detectors, air sensors, thermostats), compute-enable lighting (smart lighting), drones, routers, modems, internet of things (IoT) devices, or any combination thereof. In some embodiments, such ecosystem devices are included in a smart ecosystem (e.g., a group of devices in communication with one another using one or more communication protocols) that also includes or is otherwise connected (e.g., via a local area network (LAN)) to a virtual reality headset, input devices, or both. In response to a virtual reality headset receiving a stream of video game frames (e.g., from a cloud-based gaming server), the radar circuitry of one or more ecosystem devices is configured to transmit one or more radar signals (e.g., UWB radar signals) towards the user of the virtual reality headset. These radar signals, for example, have predetermined frequencies (e.g., frequencies between 3.1 GHz and 10.6 GHz) and are configured to bounce off one or more objects (e.g., the user of a virtual reality headset, the virtual reality headset, input devices) to produce one or more echoes (e.g., the bounced radar signals) which are received by the radar circuitry.

Based on the echoes, the client system determines motion data for the user that represents the position of the user, movement of the body (e.g., torso, legs, arms, fingers) of the user, movement of the head of the user, movement of the virtual reality headset, movement of input devices, or any combination thereof. For example, based on receiving radar data representing received echoes, the client system determines the times of flight for the echoes and based on the times of flight, determines the position and movement of the head of the user. The client system then determines one or more game inputs based on the motion data and provides the game inputs to an associated server. In this way, the client system uses ultra-wideband (UWB) radar to determine the movements of the user without the need for virtual reality base stations, increasing the area in which the user can move, and improving user experience. Further, using ecosystem devices that also have radar circuitry to determine the movements of the user rather than dedicated virtual reality base stations reduces the number of elements required for a virtual reality system, simplifying the set-up of the virtual reality system and improving user experience.

The techniques of the present disclosure are described in the example context of a cloud gaming system. A cloud-based server or other remote server renders a stream of video frames representing the visual content of a video game instance being executed at that server or a related server and then encodes each frame to generate a bitstream representing a stream of encoded rendered game frames for transmission to one or more client systems via one or more networks. However, it will be appreciated that the systems and techniques described herein are not limited to this example context, but instead may be implemented in any of a variety of video stream encoding/decoding systems using the guidelines provided herein.

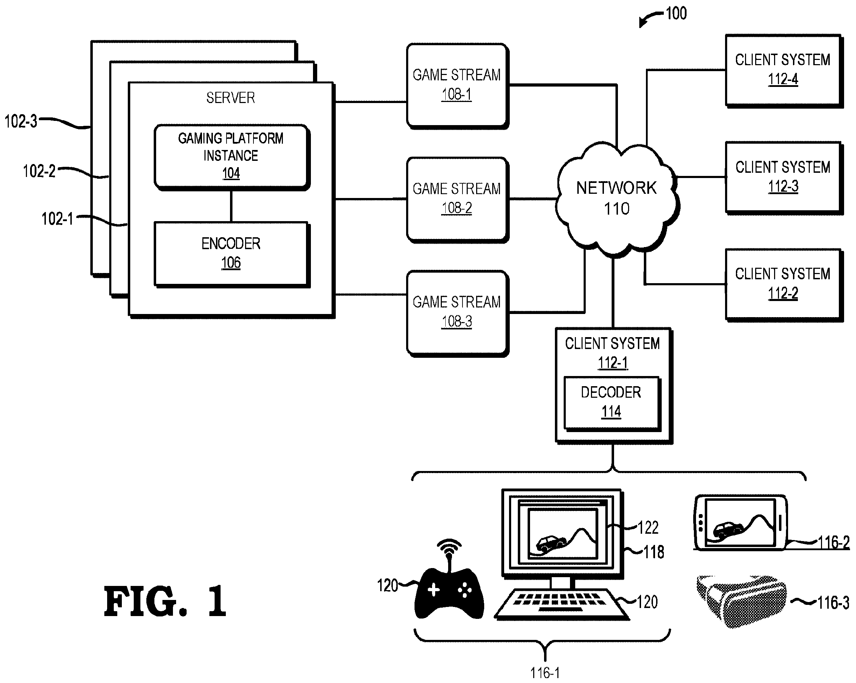

FIG. 1 illustrates a cloud-based gaming system 100 for single-player or multiplayer (including massively multiplayer) gaming, according to some embodiments. Cloud-based gaming system 100 includes one or more cloud-based gaming servers 102, with each server 102 communicatively coupled to one or more client systems 112 by at least one network 110. Network 110 is configured to allow for the transmission and reception of data between any of servers 102 and client systems 112 and includes, for example, wired and wireless networks, such as Ethernet, the Internet, Wi-Fi, or any combination thereof. In embodiments, each server 102 is communicatively interconnected via a high-bandwidth, low-latency inter-server messaging bus. Servers 102 are typically distributed in one or more data centers over a geographical area so as to reduce transmission latency through physical proximity. Though in the illustrated embodiment, three servers 102-1, 102-2, and 102-3 are presented supporting four client systems 112-1, 112-2, 112-3, and 112-4, in other embodiments, any number of servers may be implemented supporting any number of client devices. It will be appreciated that in a typical real-world implementation, the quantity of servers 102 and the quantity of client systems 112 typically will be considerably higher than presented in the example of FIG. 1.

In the depicted embodiment, each server 102 includes a computing device, for example, a cloud server, virtual server, or any combination thereof configured to support one or more client gaming sessions executed on one or more client systems 112. A "client gaming session", as used herein, includes a gaming application being played, partially simulated, or fully simulated on client system 112. Each server 102 is configured to support this client gaming session by executing a corresponding game platform instance 104 that facilitates the execution of at least a portion of the gaming application being played, partially simulated, or fully simulated on the client system 112. Such facilitation can include performing one or more operations related to the gaming application, for example, rendering one or more frames related to the gaming application, performing calculations related to the gaming application (e.g., lighting calculations, artificial intelligence calculation, physics calculations, shading calculations, input calculations, and the like), providing access to files, or any combination thereof, to name a few. The game platform instance 104 provides various software and hardware resources to achieve such facilitation, such as communication/network management, resource management, media rendering encoding, and the like. In this way, game platform instance 104 simulates the execution of one or more operations of the gaming application for a corresponding player as though that gaming application was being played on a local gaming device, such as a personal computer ("PC"), game console, smartphone, tablet computer, automotive entertainment system, and the like.

Each client system 112 represents the hardware and software resources utilized to receive player input through manipulation of one or more input/output devices for at least one player, as well as to present the video and audio content representing the visual and auditory content, respectively, of the gameplay for the at least one player. Examples of a client system 112 include one or more desktop computers, notebook computers, tablet computers, virtual-reality systems, augmented reality systems, a compute-enabled cellular phone (i.e., a "smartphone"), a compute-enabled television (i.e., a "smart TV"), or any combination thereof, to name a few. As illustrated with reference to client system 112-1, each client system 112 includes one or more client devices 116. In the illustrated embodiment, client system 112-1 comprises a first client device 116-1, which is communicatively coupled to, or otherwise associated with, display 118, at least one input device 120 (e.g., a gamepad, joystick, keyboard, mouse, touchscreen), one or more network interfaces configured to couple to the network connecting the client system 112 to a corresponding server 102, one or more processors, memory, storage, speakers, and other computing resources to render, process, and display scenes of a virtual environment.

According to embodiments, one or more client devices 116 include an ecosystem device in a smart ecosystem. Such a smart ecosystem, for example, represents a group of ecosystem devices that each have respective capabilities and run respective applications associated with those capabilities. Within the smart ecosystem, the ecosystem devices are networked together using one or more communication protocols (e.g., ZigBee, Bluetooth, Bluetooth low energy (LE), Wi-Fi) to provide their respective capabilities to one or more users. These ecosystem devices include, for example, smart hubs, virtual assistant devices, smart TVs, sensors (e.g., smoke detectors, air sensors, thermostats), smart lighting, drones, routers, modems, user devices (e.g., laptop computers, tablet computers, compute-enabled wearable devices), IoT devices, or any combination thereof. In some embodiments, a smart ecosystem further includes or is otherwise communicatively coupled (e.g., by one or more communication protocols) to one or more client devices 116 (e.g., virtual reality headset (e.g., wearable display) 116-3), input devices 120, or both. According to embodiments, one or more ecosystem devices include radar circuitry that includes one or more transceivers, transmitters, receivers, antennae, or any combination thereof and is configured to generate and transmit one or more radar signals (e.g., UWB radar signals) having one or more predetermined frequencies. For example, an ecosystem device is configured to transmit and generate one or more radar signals having frequencies between 3.1 GHz and 10.6 GHz. The transmitted radar signals are configured to bounce off one or more objects (e.g., a user, a virtual reality headset 116-3, an input device 120) to produce one or more echoes. In response to receiving the echoes, the radar circuitry of an ecosystem device is configured to determine radar data indicating the time of flight of a signal (e.g., the time between the transmission of a radar signal and the reception of an echo), an angle of a received echo, and angle of a transmitted radar signal, or any combination thereof.

As illustrated with reference to client system 112-1, each client system 112 can include a decoder 114 configured to decode one or more frames related to a virtual environment. Decoder 114 can include hardware and software configured to decode one or more encoding streams (e.g., game streams 108) received from servers 102 so as to produce a decoded set of frames or decoded stream. Each decoder 114 is configured to decode any encoded frame encoded by any method or process disclosed herein. In embodiments, client system 112-1 further comprises a smartphone client device 116-2, and a wearable virtual reality client device 116-3, each of which may operate as an integrated mobile computing device having input facilities, output facilities, display facilities, and communication facilities analogous to those noted above with respect to client system 112-1.

While certain aspects described herein will be discussed with specific reference to cloud gaming scenarios, it will be appreciated that in certain embodiments the described techniques may be utilized in various non-gaming scenarios, such as if one or more of servers 102 and client systems 112 operate to render, process, and display other types of informational content, educational content, recreational content, professional content, artistic content, or any combination thereof. It will therefore be further appreciated that while techniques are discussed herein with respect to the rendering of content that may utilize particular examples relevant to cloud gaming and gaming content, such discussions and techniques may be applied to such non-gaming scenarios. Examples provided herein may refer to scenarios involving the rendering, processing, and display of gaming content due to particular bandwidth and network latency issues relevant to such content and should not be construed to indicate that the techniques described are limited to those scenarios.

During operation, each server 102 executes a gaming platform instance 104 for one or more client gaming sessions. Executing game platform instance 104 includes rendering a set of gaming frames that includes one or more gaming frames associated with the gaming application being executed on one or more respective client systems 112. Each rendered gaming frame depicts at least a portion of a virtual environment used in the gaming application executed on the client system 112. For example, each rendered gaming frame can depict at least a portion of a virtual environment displayed on a display 118 of a client system 112 during the client gaming session.

Each server 102 is configured to encode each rendered gaming frame via a respective encoder 106 so as to generate a respective encoded set of frames (also referred to herein as "game stream" 108). Each server 102 is configured to encode a game stream 108 through, for example, compression, reorganization, and manipulation of each frame rendered by gaming platform instance 104. In embodiments, an encoder 106 of a server 102 implements one or more codecs so as to encode one or more rendered frames according to the one or more codecs. Such codecs can include H.264, H.265, VP9, AV1, or any combination thereof, to name a few. Each resulting game stream 108 corresponds to a gaming application being executed on one or more client systems 112 and is provided to these corresponding client systems 112 via network 110. The corresponding client systems 112 are each configured to decode a received game stream 108 via a decoder 114 and display the resulting decoded set of frames 122 on, for example, a display 118 (e.g., a display 118 included in virtual reality headset 116-3). Each client system 112 is configured to decode a respective game stream 108 by compression, reorganization, and manipulation of the frames within the encoded stream according to one or more various video codecs including lossless and lossy codecs. According to embodiments, each client system 112 includes a decoder that implements one or more codecs so as to decode a received game stream 108 according to the one or more codecs. Such codecs can include H.264, H.265, VP9, AV1, or any combination thereof, to name a few. Though three game streams 108-1, 108-2, 108-3 are depicted in the illustrated embodiment, in other embodiments, servers 102 can generate any number of game streams 108 each corresponding to one or more client gaming sessions.

In embodiments, a client system 112 includes a virtual reality headset (e.g., wearable display) 116-3 configured to be worn by a user and display a decoded set of frames 122 (e.g., an encoded game stream) to a user. To this end, in embodiments, virtual reality headset 116-3 includes display 118, for example. To control the gaming application associated with the decoded set of frames 122 displayed on the virtual reality headset 116-3 (e.g., the gaming application executed to generate the decoded set of frames 122), the client system includes one or more input devices 120 (e.g., keyboards, gamepads, joysticks, virtual reality controllers, computer mice, touchscreens, smartphones, microphones) each configured to receive one or more interactions from a user. Such interactions, for example, include gestures, button clicks, keystrokes, drags, rotations, movements, voice commands, noise, or any combination thereof. In response to receiving one or more interactions, an input device 120 is configured to send data indicating the interactions to a processing device in the client system 112. Such a processing device, for example, includes one or more processors each included in or otherwise connected to a respective client device (e.g., computer, smartphone, ecosystem device, virtual reality headset) of the client system 112. According to embodiments, after receiving data indicating the interactions, the processing device is configured to generate one or more game inputs based on the interactions. These game inputs each include, for example, a signal interpretable as one or more commands by the gaming application associated with the game stream 108 displayed on the virtual reality headset 116-3. To generate the game inputs, for example, the processing device compares one or more interactions indicated in the received data to data in one or more tables, arrays, vectors, libraries, or any combination thereof to determine one or more game inputs. After determining one or more game inputs, the processing device sends the game inputs to the server 102 executing the gaming application associated with the decoded set of frames 122 (e.g., decoded game stream) displayed on the virtual reality headset 116-3. In response to receiving data representing one or more interactions, one or more game inputs, or both, the server 102 is configured to modify the gaming application by generating one or more game inputs, providing one or more game inputs to the gaming application, or both. For example, the server 102 provides one or more received game inputs to the gaming application which modify the gaming application (e.g., the game inputs are used as inputs to the gaming application). Once the gaming application is modified, the server 102 generates a game stream 108 based on the modified gaming application (e.g., a modified game stream) and transmits the game stream 108 to the client system 112.

To further help control the gaming application associated with the decoded set of frames 122 displayed on the virtual reality headset 116-3, the virtual reality headset 116-3 includes one or more sensors configured to generate sensor data indicating the position of a user (e.g., the user wearing the virtual reality headset 116-3), the position of the virtual reality headset 116-3, the position of one or more input devices 120 (e.g., input devices held by the user), the movement (e.g., direction, speed, acceleration) of the user, the movement of the virtual reality headset, the movement of one or more input devices, or any combination thereof. These sensors, for example, include one or more optical sensors (e.g., photoelectric sensor, laser-based sensors, infrared sensors), ultrasound sensors, hall effect sensors, UWB radar systems, or any combination thereof. In embodiments, the sensors of the virtual reality headset 116-3 are configured to send the sensor data to a processing device (e.g., computer, smartphone, virtual reality headset, ecosystem device) of the client system 112. In response to receiving such sensor data, the processing device is configured to determine motion data based on the received sensor data. Such motion data, for example, indicates the position of a user, the position of the virtual reality headset 116-3, the position of one or more input devices, the movement (e.g., direction, speed, acceleration) of the user, the movement of the virtual reality headset, the movement of one or more input devices, or any combination thereof. Based on the determined motion data, the processing device then determines one or more game inputs by, for example, comparing the motion data to data in one or more tables, arrays, vectors, libraries, or any combination thereof. In embodiments, the processing device sends motion data, one or more game inputs, or both to the server 102 associated with the decoded set of frames 122 displayed on the virtual reality headset 116-3 (e.g., the server executing the gaming application related to decoded set of frames 122). The server 102 then modifies the gaming application by generating one or more game inputs, providing one or more game inputs to the gaming application or both. After modifying the gaming application, the server 102 sends the modified game stream 108 to the client system 112.

Additionally, to help control the gaming application associated with the decoded set of frames 122 displayed on the virtual reality headset 116-3, the client system 112 includes one or more ecosystem devices each including radar circuitry (e.g., UWB circuitry) configured to generate and transmit one or more radar signals. For example, the client system 112 includes an ecosystem device configured to generate and transmit one or more radar signals in the direction of the virtual reality headset 116-3. After transmitting one or more radar signals, the radar circuitry of an ecosystem device is configured to receive one or more echoes based on the transmitted radar signals. The ecosystem device then sends radar data indicating the transmitted radar signals, received echoes, or both to a processing device (e.g., computer, smartphone, virtual reality headset, ecosystem device) in the client system 112. Based on the radar data, the processing device is configured to determine motion data of the virtual reality headset 116-3, the user, input devices 120 (e.g., input devices 120 held by the user), or any combination. For example, the processing device is configured to determine one or more times of flight, transmit angles, receive angles, or any combination thereof based on the received radar data. The processing device then determines motion data (e.g., the position and movement of the user) based on the determined times of flight, transmit angles, and receive angles. In embodiments, the processing device then determines one or more game inputs based on the motion data by, for example, comparing the motion data to data in one or more tables, arrays, vectors, libraries, or any combination thereof and sends the game inputs to the server 102 associated with the game stream 108 which modifies the associated gaming application. In this way, the client system 112 uses radar (e.g., UWB radar) to determine the movements of the user without the need for virtual reality base stations which increases the amount of open area around the user. Additionally, using ecosystem devices in the client system 112 to determine movements of the virtual reality headset 116-3 and user rather than dedicated virtual reality base stations reduces the number of elements required for a virtual reality system, improving user experience.

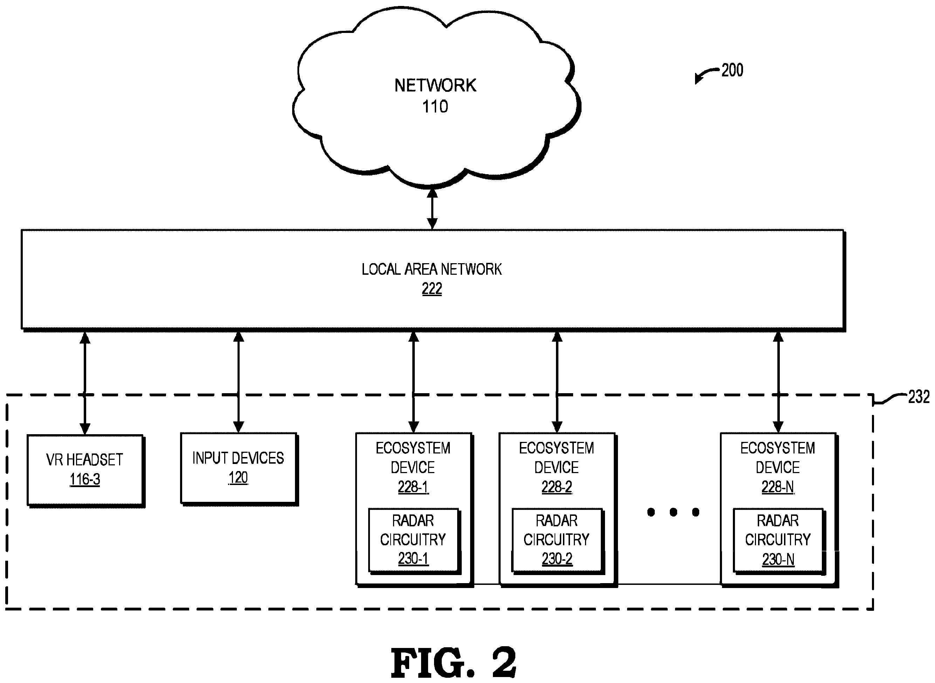

Referring now to FIG. 2, a client system 200 configured for implementing radar for cloud-based gaming inputs is presented. In embodiments, client system 200, similar to or the same as client system 112, includes smart ecosystem 232 representing a group of devices (ecosystem devices 228) that each has respective capabilities and are networked together using one or more communication protocols (e.g., ZigBee, Bluetooth, Bluetooth LE, Wi-Fi) to provide their respective capabilities to one or more users. For example, smart ecosystem 232 includes one or more ecosystem devices 228 each communicatively coupled to one or more other ecosystem devices 228 by local area network (LAN) 222 (e.g., wireless network, Wi-Fi network). Though the example embodiment illustrated in FIG. 2 presents smart ecosystem 232 having three ecosystem devices (228-1, 228-2, 228-N) representing an N number of ecosystem devices 228, in other embodiments, smart ecosystem 232 can have any number of ecosystem devices 228. Such ecosystem devices 232 include, for example, smoke detectors, air sensors, thermostats), smart lighting, drones, routers, modems, loT devices, or any combination thereof. In some embodiments, smart ecosystem 232 further includes or is otherwise communicatively coupled to (e.g., via LAN network 222) virtual reality headset 116-3 (e.g., wearable display), one or more input devices 120 (e.g., virtual reality controllers), or both.

According to embodiments, one or more devices within smart ecosystem 232 (e.g., virtual reality headset 116-3, input devices 120, ecosystem devices 228) are communicatively coupled to network 110 via LAN network 222 so to receive a game stream 108 representing game frames from a gaming application executed on a server 102. According to embodiments, the client system 200 includes a decoder (e.g., decoder 114) configured to decode a received game stream 108 and provide the decoded game stream 108 to virtual reality headset (e.g., wearable display) 116-3 for display. For example, the client system 200 includes one or more client devices 116 (e.g., computers, gaming consoles, smartphones, virtual reality headsets, ecosystem devices) including a decoder configured to decode a received game stream 108 and provide the decoded set of frames 122 to virtual reality headset 116-3. To control the gaming application represented by the decoded game stream being displayed by virtual reality headset 116-3, client system 200 includes one or more input devices 120. For example, client system 200 includes one or more virtual reality controllers each including accelerometers, motion sensors, buttons, joysticks, touchpads, microphones, or any combination thereof. While the decoded game stream is displayed by virtual reality headset 116-3, one or more input devices 120 are configured to receive one or more interactions (e.g., gestures, button clicks, keystrokes, drags, rotations, movements, voice commands, noise) from a user (e.g., the user of the virtual reality headset 116-3). In response to receiving one or more interactions, the input devices 120 send data representing the interactions to a processing device within client system 200. Such a processing device (not shown for clarity), for example, includes one or more processors each included in or otherwise connected to a respective client device 116 (e.g., computer, smartphone, ecosystem device, virtual reality headset) of the client system 200. For example, the processing devices includes one or more processors included in virtual reality headset 116-3. Based on the interactions (e.g., based on the input data indicating the interactions), the processing device determines one or more game inputs by, for example, comparing the interactions to data in one or more tables, arrays, vectors, libraries, or any combination thereof. The processing device then sends the data representing the interactions, one or more game inputs, or both to the server 102 running the gaming application represented by the decoded game stream displayed on virtual reality headset 116-3. The server 102 then modifies the gaming application based on the received data representing the interactions, one or more game inputs, or both by, for example, providing one or more game inputs to the gaming application. In this way, client system 200 uses input devices 120 to control (e.g., modify) the gaming application running on the server 102.

To further help control the gaming application represented by the decoded game stream being displayed by virtual reality headset 116-3, virtual reality headset 116-3 includes one or more sensors configured to generate sensor data indicating the position, movement (e.g., direction, speed, acceleration), or both of the user, the virtual reality headset 116-3, one or more input devices 120 (e.g., input devices 120 held by the user), or any combination thereof. For example, virtual reality headset 116-3 includes an accelerometer configured to generate sensor data indicating the direction of the user. Based on the sensor data, a processing device of client system 200 is then configured to determine motion data of the user, virtual reality headset 116-3, input devices 120, or any combination thereof (e.g., the position, movement, or both of the user, the virtual reality headset 116-3, one or more input devices 120). For example, a computer of client system 200 includes one or more processors configured to determine the position and movement of the virtual reality headset 116-3. Using such motion data, the processing device then determines one or more game inputs by, for example, comparing the motion data to data in one or more tables, arrays, vectors, libraries, or any combination thereof. In embodiments, the processing device then sends the motion data, game inputs, or both to the server 102 running the game application associated with the displayed game stream 108 to modify the game application.

Additionally, according to embodiments, one or more ecosystem devices 228 include radar circuitry 230 that includes hardware-based circuitry, software-based circuitry, or both configured to transmit one or more radar signals (e.g., UWB radar signals) and received one or more echoes. Such radar circuitry 230, for example, is configured to help generate radar data (e.g., times of flight, transmit angles, receive angles) for determining motion data of the user, virtual reality device 116-3, input devices 120, or any combination thereof. To this end, radar circuitry 230 is first configured to generate one or more radar signals having one or more predetermined frequencies (e.g., between 3.1 GHz and 10.6 GHz). For example, radar circuitry 230 is configured to generate a series of pulses at one or more predetermined frequencies (e.g., between 3.1 GHz and 10.6 GHz). In embodiments, radar circuitry 230 is configured to transmit one or more radar signals towards virtual reality headset 116-3, the user, input devices 120, or any combination thereof. As an example, radar circuitry 230 first determines whether virtual reality headset 116-3, the user, input devices 120, or any combination thereof is within range of radar circuitry 230 based on, for example, one or more communication protocols (e.g., by the virtual reality headset 116-3 reporting its position), one or more received echoes (e.g., indicating the position of the virtual reality headset 116-3 is in range), one or more motion sensors (e.g., optical sensors, ultrasound sensors, laser-based sensors), one or more user inputs, or any combination thereof. Radar circuitry 230 then transmits one or more radar signals (e.g., towards virtual reality system 116-3) and receives one or more echoes (e.g., radar signals that have bounced off virtual reality system 116-3, the user, one or more input devices 120, or any combination thereof). Based on the echoes, the radar circuitry 230 determines radar data indicating the times of flight for one or more radar and echo signals, transmit angles for one or more radar signals, receive angles for one or more echoes, or any combination thereof. Though the example embodiment presented in FIG. 2 presents three ecosystem devices (228-1, 228-2, 228-N) each having respective radar circuitry (230-1, 230-2, 230-N), in other embodiments, any number of ecosystem devices 228 within smart ecosystem 232 may have respective radar circuitry 230.

According to embodiments, radar circuitry 230 is configured to send radar data indicating the radar signals and echoes, the radar data, or both, to a processing device in client system 200. For example, radar circuitry 230 sends radar data to an ecosystem device 228 within smart ecosystem 232 that includes one or more processors. In response to receiving the radar data indicating the radar signals and echoes, the radar data, or both, the processing device is configured to determine motion data (the position, movement, or both of the user, the virtual reality headset 116-3, one or more input devices 120). For example, the processing device compares received radar data to data in one or more tables, arrays, vectors, libraries, or any combination thereof to determine the position and movement of the user and one or more input devices 120 (e.g., input devices held by the user). Further, using such motion data, the processing device then determines one or more game inputs by, for example, comparing the motion data to data in one or more tables, arrays, vectors, libraries, or any combination thereof. In embodiments, the processing device then sends the motion data, game inputs, or both to the server 102 running the game application associated with the displayed game stream 108 to modify the game application.

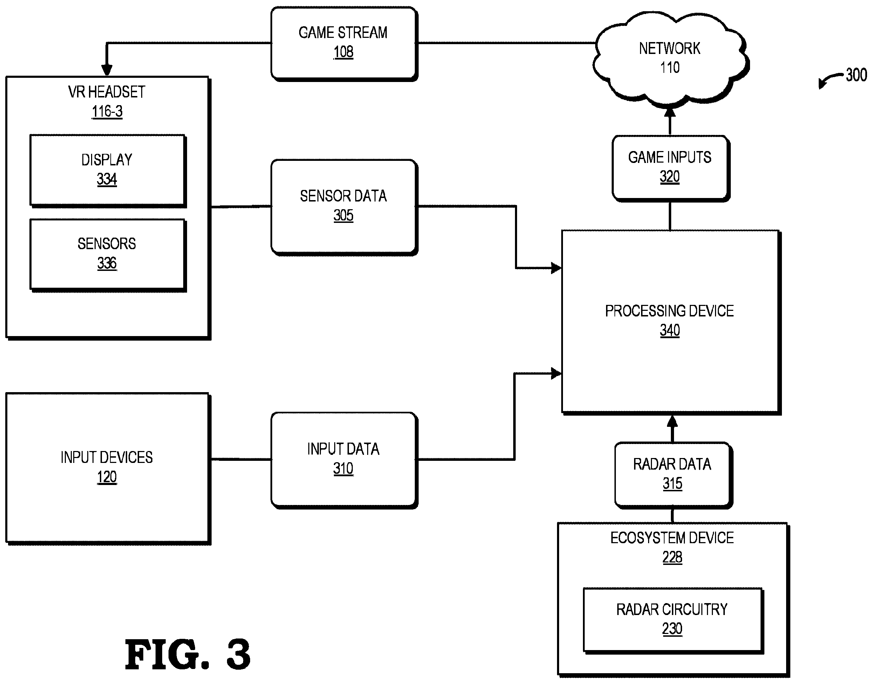

Referring now to FIG. 3, an example process 300 for implementing radar for cloud-based gaming inputs is presented. The example process 300 first includes virtual reality headset 116-3 (e.g., wearable display) receiving, via network 110, a game stream 108 representative of a gaming application executed by a server 102. In embodiments, virtual reality display 116-3 includes or is otherwise connected to display 334 comprising one or more displays (e.g., liquid crystal display (LCD) screens, light-emitting diode (LED) screens, organic light-emitting diode (OLED) screens, active-matrix organic light-emitting diode (AMOLED) screen, or any combination thereof) configured to display game stream 108. As an example, in some embodiments, a client system (e.g., client systems 112, 200) including virtual reality headset 116-3 include one or more decoders (e.g., decoder 114) configured to decode a game stream 108 received from network 110 to produce a decoded game stream displayed by display 334. To control the gaming application represented by the game stream 108 displayed on display 334, virtual reality headset 116-3 includes one or more sensors 336 configured to generate sensor data 305 indicating the position of a user (e.g., the user wearing the virtual reality headset 116-3), the position of the virtual reality headset 116-3, the position of one or more input devices 120 (e.g., input devices held by the user), the movement (e.g., direction, speed, acceleration) of the user, the movement of the virtual reality headset, the movement of one or more input devices, or any combination thereof. Such sensors 336 include, for example, one or more optical sensors (e.g., photoelectric sensor, laser-based sensors, infrared sensors), ultrasound sensors, hall effect sensors, or any combination thereof. After generating sensor data 305, virtual reality headset 116-3 sends sensor data 305 to one or more processing devices 340 included in one or more client systems (e.g., client systems 112, 200). A processing device 340, for example, includes one or more processors each included in or otherwise connected to a respective client device 116 (e.g., computer, smartphone, ecosystem device, virtual reality headset) of a client system (e.g., client systems 112, 200).

Additionally, to help control the gaming application represented by the game stream 108 displayed on display 334, the example process 300 includes one or more input devices 120 (e.g., input devices 120 held by the user, virtual reality controllers) receiving one or more interactions (e.g., gestures, button clicks, keystrokes, drags, rotations, movements, voice commands, noise) from a user (e.g., the user of the virtual reality headset 116-3). In response to receiving one or more interactions, input devices 120 send input data 310 representing the interactions to one or more processing devices 340. Further, to help control the gaming application represented by the game stream 108, the example process 300 includes an ecosystem device 228 having radar circuitry 230 and configured to generate and send radar data 315 to processing device 340. To this end, in response to virtual reality headset 116-3 receiving game stream 108, radar circuitry 230 of ecosystem device 228 is configured to generate and transmit one or more radar signals in the direction of virtual reality headset 116-3. Such radar signals then bounce off virtual reality headset 116-3, the user, input devices 120 (e.g., input devices 120 held by the user), or any combination thereof to produce one or more echoes. In response to receiving one or more echoes, radar circuitry 230 determines radar data 315 based on the received echoes. Radar data 315, for example, includes data indicating times of flight, transmit angles, receive angles, or any combination thereof for one or transmitted radar signals, received echoes, or both. For example, in response to receiving an echo, radar circuitry 230 performs one or more operations based on the echo (e.g., operations based on the power of the echo, the angle of the echo, the time the echo was received) to determine radar data 315. After determining radar data 315, ecosystem device 228 sends radar data 315 to processing device 340.

In response to receiving sensor data 305, input data 310, radar data 315, or any combination thereof, processing device 340 is configured to determine one or more game inputs 320. Such game inputs, for example, include signals interpretable by the gaming application to perform one or more commands. According to embodiments, to generate game inputs 320, a processing device 340 is configured to compare sensor data 305, input data 310, radar data 315, or any combination thereof to data stored in one or more tables, arrays, vectors, libraries, or any combination thereof. As an example, a processing device 340 is configured to compare one or more interactions indicated in input data 310 to data stored in one or more tables, arrays, vectors, libraries, or any combination thereof to determine one or more commands for a gaming application. The processing device 340 then generates one or more game inputs 320 based on the determined commands.

Additionally, to generate game inputs 320, a processing device is configured to determine motion data for virtual reality headset 116-3, the user, one or more input devices 120, or any combination thereof based on sensor data 305, input data 310, radar data 315, or any combination thereof. Such motion data, for example, includes data indicating the position, movement (e.g., direction, speed, acceleration), or both of the user, the virtual reality headset 116-3, one or more input devices 120, or any combination thereof. For example, based on one or more times of flight, transmit angles, receive angles, or any combination thereof indicated in radar data 315, processing device 340 is configured to determine the position and movement of the user based on a comparison of the times of flight, transmit angles, and receive angles indicated in radar data 315 to one or more previously determined positions of the user, previously determined movement of the user, previously received times of flight, previously received transmit angles, previously received receive angles, or any combination thereof (e.g., as indicated in radar data previously received from ecosystem device 228, indicated in previously received sensor data 305, previously determined by processing device 340, or any combination thereof). After determining motion data for virtual reality headset 116-3, the user, one or more input devices 120, or any combination thereof, a processing device 340 then generates one or more game inputs 320 based on the motion data. For example, the processing device 340 compares the movement of the user indicated in the motion data to data in one or more tables, arrays, vectors, libraries, or any combination thereof to determine one or more commands for the gaming application. The processing device 340 then generates one or more game inputs 320 based on the determined commands. In this way, radar data 315 generated by ecosystem device 228 is configured to generate game inputs 320 for a gaming application. In this way, radar data 315 is used to control the gaming application represented by the game stream 108 displayed on virtual reality headset 116-3.

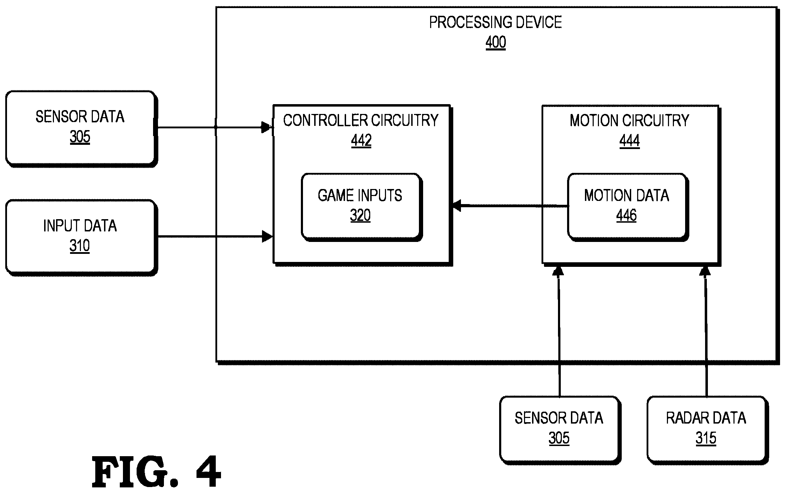

Referring now to FIG. 4, an example processing device 400 for implementing radar for cloud-based gaming inputs is presented. In embodiments, example processing device 400, similar to or the same as processing device 340, includes one or more processors each included in or otherwise connected to a respective client device 116 (e.g., computer, smartphone, ecosystem device, virtual reality headset) of a client system (e.g., client systems 112, 200). According to embodiments, example processing device 400 includes controller circuitry 442 that includes hardware-based circuitry, software-based circuitry, or both configured to generate motion data 446 based on sensor data 305 (e.g., data indicating the position of a user, the position of the virtual reality headset (e.g., wearable display) 116-3, the position of one or more input devices, the movement of the user, the movement of the virtual reality headset, the movement of one or more input devices), radar data 315 (e.g., data indicating times of flight, transmit angles, receive angles, or any combination thereof for one or transmitted radar signals, received echoes, or both), or both. Such motion data 446 includes, for example, data indicating the position, movement (e.g., direction, speed, acceleration), or both of the user, the virtual reality headset 116-3, one or more input devices 120, or any combination thereof. In some embodiments, to generate motion data 446, motion circuitry 444 is configured to determine a position of virtual reality headset 116-3, a user, one or more input devices, or any combination thereof relative to one or more ecosystem devices 228 based on radar data 315. For example, in response to receiving radar data 315 from one or more respective ecosystem devices 228, motion circuitry 444 is configured to determine a position of virtual reality headset 116-3, a user, one or more input devices, or any combination thereof based on the times of flight, transmit angles, receive angles, or any combination thereof indicated in the received radar data 315 and based on the positions of one or more respective ecosystem devices 228 (e.g., the ecosystem devices 228 that generated the radar data 315). That is to say based on the position of an ecosystem device 228 and radar data 315 (time of flight, transmit angle, receive angle) generated by the ecosystem device 228, motion circuitry 444 is configured to determine a position of virtual reality headset 116-3, the user, one or more input devices, or any combination thereof relative to the position of the ecosystem device.

In embodiments, to generate motion data 446, in embodiments, motion circuitry 444 is configured to compare sensor data 305, radar data 315, or both, to previously received sensor data (e.g., data indicating previous positions and movement of the user, virtual reality headset 116-3, and input devices 120), previously received radar data (e.g., data indicating previous times of flight, receive angles, and transmit angles), previously determined motion data, or any combination thereof. For example, motion circuitry 444 is configured to compare one or more movements of virtual reality headset 116-3 indicated by sensor data 305 to previously determined motion data to determine a change in position and movement of virtual reality headset 116-3, a current position and movement of virtual reality headset 116-3, or both. As another example, motion circuitry 444 is configured to compare one or more times of flight indicated in radar data 315 to previously determined motion data to determine a change in the position of the user, a current position of the user, or both. After determining motion data 446, motion circuitry 444 sends the motion data 446 to controller circuitry 442.

Controller circuitry 442 includes hardware-based circuitry, software-based circuitry, or both configured to determine one or more game inputs 320 (e.g., signals interpretable as one or more commands by a gaming application) based on sensor data 305, input data 310 (e.g., data representing interactions with input devices 120), motion data 446, or any combination thereof. For example, controller circuitry 442 is configured to determine game inputs 320 based on input data 310 by comparing one or more interactions indicated in input data 310 to data in one or more tables, arrays, vectors, libraries, or any combination thereof to determine one or more commands and generate one or more game inputs 320 based on the commands. As another example, controller circuitry 442 is configured to compare one or more angles, movements, or both indicated in sensor data 305 to one or more tables, arrays, vectors, libraries, or any combination thereof to determine one or more commands and generate one or more game inputs 320 based on the commands. As yet another example, controller circuitry 442 is configured to compare one or more positions, movement, or both of virtual reality headset 116-3, the user, one or more input devices 120, or any combination thereof indicated in motion data 446 to one or more tables, arrays, vectors, libraries, or any combination thereof to determine one or more commands and generate one or more game inputs 320 based on the commands.

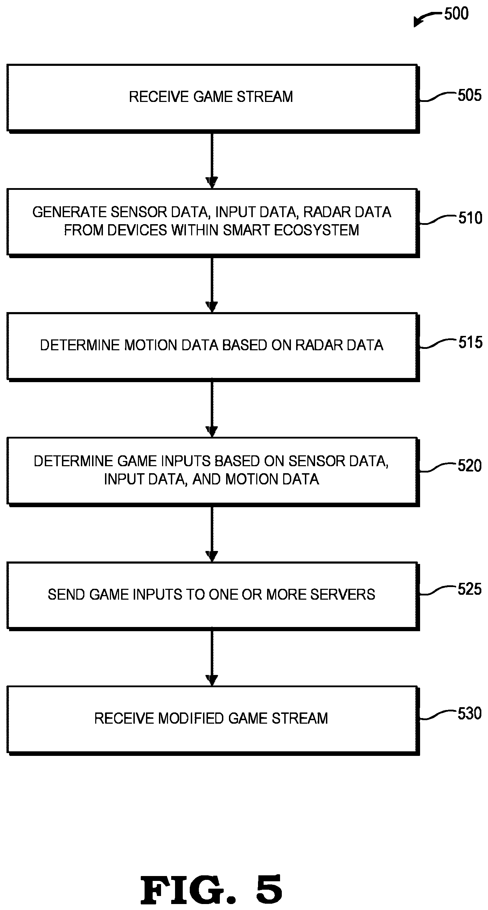

Referring now to FIG. 5, an example method 500 for implementing radar for cloud-based gaming inputs is presented. At step 505 of example method 500, a client system (e.g., client system 112, 200) including a virtual reality headset (e.g., virtual reality headset 116-3) and one or more input devices (e.g., input devices 120) receives a game stream (e.g., game stream 108). The game stream represents a gaming application being executed on a server (e.g., server 102) connected to the client system by network 110. In response to receiving the game stream, the client system decodes the game stream to produce a decoded game stream that is provided to the virtual reality headset (e.g., wearable display). The virtual reality headset then displays the decoded game stream on a display (e.g., display 334). At step 510, client devices (e.g., client devices 116) within the client system generate sensor data (e.g., sensor data 305), input data (e.g., input data 310), and radar data (e.g., radar data 315) to control the gaming application represented by the decoded game stream displayed on the virtual reality headset. To this end, the virtual reality headset of the client system includes one or more sensors (e.g., sensors 336) configured to generate sensor data indicating the position of a user, the position of the virtual reality headset 116-3, the position of one or more input devices, the movement of the user, the movement of the virtual reality headset, the movement of one or more input devices. For example, the sensors of the virtual reality headset are configured to generate sensor data indicating the movement and angle of the virtual reality headset. Additionally, the input devices of the client system are configured to receive one or more interactions (e.g., gestures, button clicks, keystrokes, drags, rotations, movements, voice commands, noise) and generate input data representing the received interactions.

Still referring to step 510, the client system also includes a smart ecosystem (e.g., smart ecosystem 232) representing a group of devices (e.g., ecosystem devices 228) that each has respective capabilities and are networked together using one or more communication protocols (e.g., ZigBee, Bluetooth, Bluetooth LE**,** Wi-Fi) to provide their respective capabilities to one or more users. In embodiments, the virtual reality headset and input devices of the client system are included in or otherwise communicatively coupled to the smart ecosystem. According to embodiments, the smart ecosystem of the client system includes one or more ecosystem devices configured to generate one or more radar signals. Such radar signals, for example, include one or more pulses having one or more predetermined frequencies (e.g., between 3.1 GHz and 10.6 GHz). The radar signals are configured to bounce off of the virtual reality headset, the user, one or more input devices, or any combination thereof to produce one or more echoes (e.g., signals representing the bounced radar signals). In response to receiving one or more echoes, an ecosystem device is configured to generate radar data indicating the times of flight, transmit angles, receive angles, or any combination thereof for one or more radar signals, echoes, or both. In embodiments, after generating the sensor data, input data, or radar data, respectively, the virtual reality headset, input devices, and ecosystem devices are configured to send the generated sensor data, input data, and radar data to a processing device (e.g., processing device 340, 400) of the client system. Such a processing device, for example, includes one or more processors each included in or otherwise connected to a respective client device 116 (e.g., computer, smartphone, ecosystem device, virtual reality headset) of a client system (e.g., client systems 112, 200).

At step 515, in response to receiving radar data from one or more ecosystem devices, the processing device is configured to determine motion data (e.g., motion data 446) for the virtual reality headset, the user, one or more input devices, or any combination thereof. Such motion data includes, for example, data indicating the position, movement (e.g., direction, speed, acceleration), or both of the user, the virtual reality headset, one or more input devices, or any combination thereof. To generate the motion data, in embodiments, the processing device compares the received radar data to previously received radar data (e.g., data indicating previous times of flight, receive angles, and transmit angles), previously determined motion data, or both. For example, the processing device compares one or more times of flight indicated in the received radar data to previously determined motion data to determine a change in the position of the user, a current position of the user, or both. At step 520, the processing device determines one or more game inputs (e.g., signals interpretable as one or more commands by a gaming application) based on the received sensor data, received input data, determined motion data, or any combination thereof. For example, the processing device compares the received sensor data, received input data, determined motion data, or any combination thereof to data in one or more tables, arrays, vectors, libraries, or any combination thereof to determine one or more commands. As an example, the processing device compares one or more positions and movements of the virtual reality headset indicated in determined motion data to data in one or more tables, arrays, vectors, libraries, or any combination thereof to determine one or more commands. Based on the determined commands, the processing device determines the game inputs.

At step 525, the processing device sends the determined game inputs to the server executing the gaming application associated with the game stream displayed on the virtual reality headset. In response to receiving the game inputs, the server provides the game inputs to the gaming application, modifying the gaming application based on the commands indicated in the game inputs. Based on the modified gaming application, the server generates a modified game stream and sends the game stream to the client device. At step 530, the client system receives the modified game stream, decodes the modified game stream, and provides the decoded modified game stream to the virtual reality headset for display.

In some embodiments, certain aspects of the techniques described above may be implemented by one or more processors of a processing system executing software. The software comprises one or more sets of executable instructions stored or otherwise tangibly embodied on a non-transitory computer-readable storage medium. The software can include the instructions and certain data that, when executed by the one or more processors, manipulate the one or more processors to perform one or more aspects of the techniques described above. The non-transitory computer-readable storage medium can include, for example, a magnetic or optical disk storage device, solid-state storage devices such as Flash memory, a cache, random access memory (RAM), or other non-volatile memory device or devices, and the like. The executable instructions stored on the non-transitory computer-readable storage medium may be in source code, assembly language code, object code, or another instruction format that is interpreted or otherwise executable by one or more processors.

A computer-readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer-readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still, further, the order in which activities are listed is not necessarily the order in which they are performed. Also, the concepts have been described with reference to specific embodiments. However, one of ordinary skill in the art appreciates that various modifications and changes can be made without departing from the scope of the the claims. Accordingly, the specification and figures are to be regarded in an illustrative rather than a restrictive sense, and all such modifications are intended to be included within the scope of the claims.

Benefits, other advantages, and solutions to problems have been described above with regard to specific embodiments. However, the benefits, advantages, solutions to problems and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the claims. Accordingly, the protection sought herein is as set forth in the claims below.

## Claims

1. A computer-implemented method for cloud-based gaming comprising:
in response to a wearable display (116) receiving a video stream representative of an application (108) and displaying the video stream (108), transmitting a radar signal;
determining, from the radar signal, motion data of a user of the wearable display; and
generating one or more inputs (320) for the application based on the motion data of the user of the wearable display.

2. The computer-implemented method of claim 1, further comprising:
modifying the video stream based on the one or more inputs; and
sending the modified video stream to the wearable display.

3. The computer-implemented method of either of claims 1 or 2, further comprising:
generating, at the wearable display, sensor data (305) associated with the user, wherein the one or more game inputs are further determined based on the sensor data associated with the user.

4. The computer-implemented method of any of claims 1 to 3, further comprising:
receiving, at an input device (120), one or more interactions, wherein the one or more game inputs are further determined based on input data representing the one or more interactions.

5. The computer-implemented method of any of claims 1 to 4, further comprising:
sending the one or more inputs to a cloud-based server (102) associated with the video stream.

6. The computer-implemented method of any of claims 1 to 5, wherein the motion data indicates a position of the user of the wearable display.

7. The computer-implemented method of any of claims 1 to 6, wherein the motion data indicates a position of the wearable display.

8. The computer-implemented method of any of claims 1 to 7, wherein the wearable display is connected to a smart ecosystem (232) including an ecosystem device (228) configured to transmit the radar signal.

9. The computer-implemented method of claim 8, wherein the ecosystem device comprises at least one of a smart hub, display, or sensor.

10. The computer-implemented method of any of claims 1 to 9, wherein the radar signal comprises an ultra-wideband radar signal.

11. A cloud-based gaming system (100) comprising:
one or more cloud-based servers (102) communicatively coupled to one or more
client systems (112) or smart ecosystems (112), each client system or smart ecosystem including:
a wearable display (116) including one or more processors;
and one or more ecosystem devices (228), wherein at least one ecosystem device includes one or more processor and a memory coupled to the one or more processors and storing executable instructions configured to manipulate the one or more processors to perform the computer-implemented method of any of claims 1-10.

## Patentansprüche

1. Computerimplementiertes Verfahren zum Cloud-basierten Spielen, umfassend:
als Reaktion darauf, dass eine tragbare Anzeige (116) einen Videostream empfängt, der eine Anwendung (108) repräsentiert, und den Videostream (108) anzeigt, Übertragen eines Radarsignals;
Bestimmen von Bewegungsdaten eines Benutzers der tragbaren Anzeige aus dem Radarsignal; und
Erzeugen einer oder mehrerer Eingaben (320) für die Anwendung basierend auf den Bewegungsdaten des Benutzers der tragbaren Anzeige.

2. Computerimplementiertes Verfahren nach Anspruch 1, ferner umfassend:
Modifizieren des Videostreams basierend auf der einen oder den mehreren Eingaben; und
Senden des modifizierten Videostreams an die tragbare Anzeige.

3. Computerimplementiertes Verfahren nach entweder Anspruch 1 oder 2, ferner umfassend:
Erzeugen von Sensordaten (305) an der tragbaren Anzeige, die dem Benutzer zugeordnet sind, wobei die eine oder mehreren Spieleingaben ferner basierend auf den Sensordaten, die dem Benutzer zugeordnet sind, bestimmt werden.

4. Computerimplementiertes Verfahren nach einem der Ansprüche 1 bis 3, ferner umfassend:
Empfangen einer oder mehrerer Interaktionen an einer Eingabevorrichtung (120), wobei die eine oder mehreren Spieleingaben ferner basierend auf Eingabedaten, die die eine oder mehreren Interaktionen repräsentieren, bestimmt werden.

5. Computerimplementiertes Verfahren nach einem der Ansprüche 1 bis 4, ferner umfassend:
Senden der einen oder mehreren Eingaben an einen Cloud-basierten Server (102), der dem Videostream zugeordnet ist.

6. Computerimplementiertes Verfahren nach einem der Ansprüche 1 bis 5, wobei die Bewegungsdaten eine Position des Benutzers der tragbaren Anzeige angeben.

7. Computerimplementiertes Verfahren nach einem der Ansprüche 1 bis 6, wobei die Bewegungsdaten eine Position der tragbaren Anzeige angeben.

8. Computerimplementiertes Verfahren nach einem der Ansprüche 1 bis 7, wobei die tragbare Anzeige mit einem intelligenten Ökosystem (232) verbunden ist, das eine Ökosystemvorrichtung (228) beinhaltet, die dazu konfiguriert ist, das Radarsignal zu übertragen.

9. Computerimplementiertes Verfahren nach Anspruch 8, wobei die Ökosystemvorrichtung mindestens eines von einem intelligenten Hub, einer Anzeige oder einem Sensor umfasst.

10. Computerimplementiertes Verfahren nach einem der Ansprüche 1 bis 9, wobei das Radarsignal ein Ultrabreitbandradarsignal umfasst.

11. Cloud-basiertes Spielsystem (100), umfassend:
ein oder mehrere Cloud-basierte Server (102), die kommunikativ mit einem oder mehreren Client-Systemen (112) oder intelligenten Ökosystemen (112) gekoppelt sind, wobei jedes Client-System oder intelligente Ökosystem beinhaltet:
eine tragbare Anzeige (116), die einen oder mehrere Prozessoren beinhaltet;
und eine oder mehrere Ökosystemvorrichtungen (228), wobei mindestens eine Ökosystemvorrichtung einen oder mehrere Prozessoren und einen Speicher beinhaltet, der mit dem einen oder den mehreren Prozessoren gekoppelt ist und ausführbare Anweisungen speichert, die dazu konfiguriert sind, den einen oder die mehreren Prozessoren zu manipulieren, um das computerimplementierte Verfahren nach einem der Ansprüche 1-10 durchzuführen.

## Revendications

1. Procédé mis en œuvre par ordinateur de jeu en nuage comprenant :
en réponse à la réception, par un dispositif d'affichage portable (116), d'un flux vidéo représentatif d'une application (108) et à l'affichage du flux vidéo (108), la transmission d'un signal radar ;
la détermination, à partir du signal radar, de données de mouvement d'un utilisateur du dispositif d'affichage portable ; et
la génération d'une ou plusieurs entrées (320) pour l'application sur la base des données de mouvement de l'utilisateur du dispositif d'affichage portable.

2. Procédé mis en œuvre par ordinateur selon la revendication 1, comprenant en outre :
la modification du flux de jeu sur la base des une ou plusieurs entrées ; et
l'envoi du flux de vidéo modifié au dispositif d'affichage portable.

3. Procédé mis en œuvre par ordinateur selon la revendication 1 ou 2, comprenant en outre :
la génération, au niveau du dispositif d'affichage portable, de données de capteur (305) associées à l'utilisateur, dans lequel les une ou plusieurs entrées de jeu sont en outre déterminées sur la base des données de capteur associées à l'utilisateur.

4. Procédé mis en œuvre par ordinateur selon l'une quelconque des revendications 1 à 3, comprenant en outre :
la réception, au niveau d'un dispositif d'entrée (120), d'une ou plusieurs interactions, dans lequel les une ou plusieurs entrées de jeu sont en outre déterminées sur la base de données d'entrée représentant les une ou plusieurs interactions.

5. Procédé mis en œuvre par ordinateur selon l'une quelconque des revendications 1 à 4, comprenant en outre :
l'envoi des une ou plusieurs entrées à un serveur en nuage (102) associé au flux vidéo.

6. Procédé mis en œuvre par ordinateur selon l'une quelconque des revendications 1 à 5, dans lequel les données de mouvement indiquent une position de l'utilisateur du dispositif d'affichage portable.

7. Procédé mis en œuvre par ordinateur selon l'une quelconque des revendications 1 à 6, dans lequel les données de mouvement indiquent une position du dispositif d'affichage portable.

8. Procédé mis en œuvre selon l'une quelconque des revendications 1 à 7, dans lequel le dispositif d'affichage portable est connecté à un écosystème intelligent (232) comportant un dispositif d'écosystème (228) configuré pour transmettre le signal radar.

9. Procédé mis en œuvre par ordinateur selon la revendication 8, dans lequel le dispositif d'écosystème comprend au moins l'un d'un concentrateur intelligent, d'un dispositif d'affichage ou d'un capteur.

10. Procédé mis en œuvre par ordinateur selon l'une quelconque des revendications 1 à 9, dans lequel le signal radar comprend un signal radar à bande ultra-large.

11. Système de jeu en nuage (100) comprenant :
un ou plusieurs serveurs en nuage (102) couplés de manière communicative à un ou plusieurs systèmes clients (112) ou écosystèmes intelligents (112), chaque système client ou écosystème intelligent comportant :
un dispositif d'affichage portable (116) comportant un ou plusieurs processeurs ;
et un ou plusieurs dispositifs d'écosystème (228), dans lequel au moins un dispositif d'écosystème comporte un ou plusieurs processeurs et une mémoire couplée aux un ou plusieurs processeurs et stockant des instructions exécutables configurées pour manipuler les un ou plusieurs processeurs pour réaliser le procédé mis en œuvre par ordinateur selon l'une quelconque des revendications 1 à 10.
